# EUROPEAN PATENT SPECIFICATION

(11) **EP 4 002 209 B1**
(45) Date of publication and mention of the grant of the patent: **24.04.2024**
(21) Application number: 21190741.5
(22) Date of filing: 11.08.2021
(51) Int. Cl.: G06K 19/07

(54) **INTERNET OF THINGS LABEL FOR FACTORY AND WAREHOUSE APPLICATIONS**
INTERNET-DER-DINGE-ETIKETT FÜR WERK- UND LAGERANWENDUNGEN
ÉTIQUETTE INTERNET DES OBJETS POUR DES APPLICATIONS D'USINE ET D'ENTREPÔT

(30) Priority: 13.11.2020 US 202063113795 P
(43) Date of publication of application: 25.05.2022
(73) Proprietor: The Boeing Company, Arlington, VA 22202 (US)
(72) Inventor: WILLIAMS, John Dalton, Huntsville, 35813 (US); MITCHELL, Michael Francis, Huntsville, 35824 (US)
(74) Representative: Plasseraud IP

(56) References cited:
- EP-A1- 3 720 151
- US-A1- 2013 161 400
- US-A1- 2019 327 306

## Description

### BACKGROUND

Embodiments generally relate to object labeling. More particularly, embodiments relate to an Internet of Things (IoT) label for factory and warehouse applications. Traditional tracking of objects within factories may be heavily reliant on manual processes, which can be costly and time consuming. While more recent smart tracking solutions may have reduced the reliance on manual processes, there remains considerable room for improvement. For example, passive technology such as RFID (radio frequency identifier) tags or NFC (near field communications) modules may provide for only intermittent tracking in response to an interrogation of the passive device. Moreover, active technology may have an insufficient communications infrastructure and a form factor (e.g., rigid printed circuit board placed in a traditional plastic enclosure) that limits the technology to tracking large bulk items (e.g., pallets). Additionally, conventional passive and active tracking solutions may be vulnerable to package tampering.
US2019/0327306A1, in accordance with its abstract, states a system which comprises a first peer sensor tag configured to sense first sensor data using a first local sensor of the first peer sensor tag and a second peer sensor tag configured to sense second sensor data using a second local sensor of the second peer sensor tag while the second peer sensor tag is not within a communication range of the first peer sensor tag. The second peer sensor tag is configured to detect a first beacon signal of the first peer sensor tag, the first beacon signal including at least a portion of the first sensor data, the first beacon signal being transmitted according to a first network communication protocol. The second peer sensor tag is configured to obtain the at least a portion of the first sensor data from the first beacon signal. A base station is configured to detect a second beacon signal of the second peer sensor tag, the first beacon signal including the at least a portion of the first sensor data and at least a portion of the second sensor data. The base station is configured to obtain the at least a portion of the first sensor data and the at least a portion of the second sensor data from the second beacon signal, and to provide the at least a portion of the first sensor data and the at least a portion of the second sensor data to a server system using a second network communication protocol different from the first network communication protocol.
EP3720151A1, in accordance with its abstract, states a position-locating arrangement for detecting the position of a mobile object that can move inside a defined area and for processing data relative to the mobile object, said arrangement comprising a mobile identification tag associated with the mobile object, and a stationary receiving device configured to transmit a message from the stationary receiving device to a position-locating server in response to receiving an identification message and data broadcast by the mobile identification tag, the position-locating server, remote from the mobile identification tag, receiving the message from the stationary receiving device. The arrangement of the invention is suitable for remotely determining the position of the identification tag inside the defined area and processing the data relative to the mobile object carrying same.
US2013/0161400A1, in accordance with its abstract, states an RFID sensor assembly which comprises an RFID chip, an antenna, a sensor, a substrate, and a laminated layer. The RFID chip is in electrical communication with the antenna and the sensor. The RFID chip, antenna, and sensor are secured to the substrate. The laminated layer is arranged as to create a generally airtight pouch between the substrate and the laminate layer. The laminated layer is further arranged to facilitate a post manufacturing method for exposing the contents of the pouch to the environment surrounding the RFID sensor assembly.

### SUMMARY

According to one aspect, a label is defined by independent claim 1. Further embodiments are defined by dependent claims 2 to 8.
According to another aspect, a method of operating a microcontroller is defined by independent claim 9. Further embodiments are defined by dependent claims 10 to 13.
According to another aspect, a method of fabricating a label is defined by independent claim 14. Further embodiments are defined by dependent claim 15.

### BRIEF DESCRIPTION OF THE DRAWINGS

The various advantages of the embodiments will become apparent to one skilled in the art by reading the following specification and appended claims, and by referencing the following drawings, in which:
FIG. 1 is an illustration of an example of a communications architecture for a flexible label according to an embodiment;
FIG. 2 is an illustration of multiple examples of 3D (three-dimensional) sensor geometries according to embodiments;
FIG. 3 is a side view of an example of a flexible label according to an embodiment;
FIG. 4 is a block diagram of an example of a flexible circuit according to an embodiment;
FIG. 5 is an illustration of an example of a deployment of flexible labels in a warehouse application according to an embodiment;
FIG. 6 is a flowchart of an example of a method of operating a microcontroller according to an embodiment;
FIG. 7 is a flowchart of an example of a method of reprogramming a microcontroller according to an embodiment; and
FIG. 8 is a flowchart of an example of a method of fabricating a label according to an embodiment.

### DESCRIPTION OF EMBODIMENTS

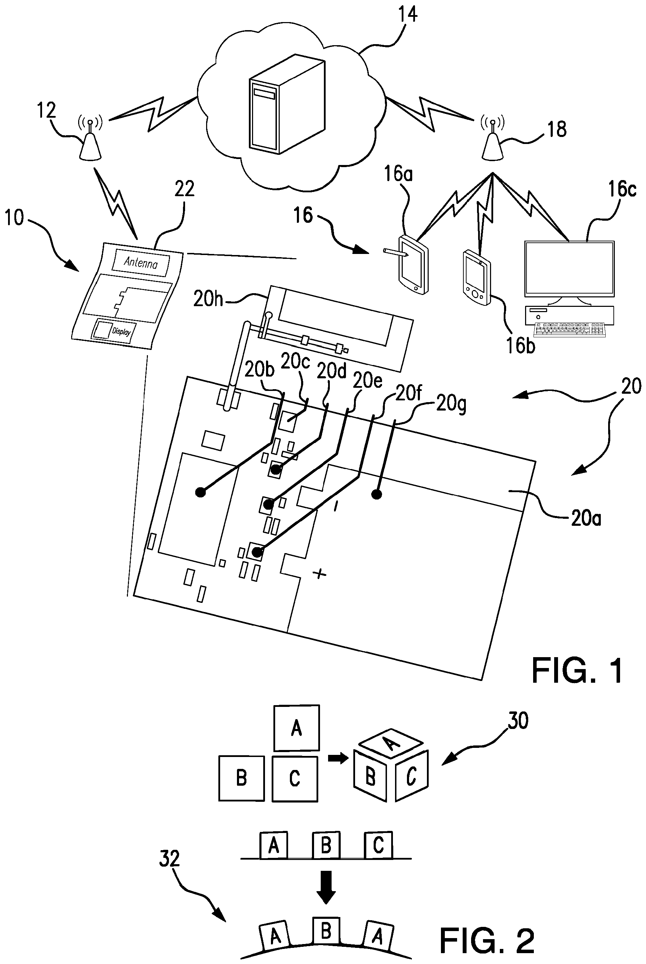

Turning now to FIG. 1, an IoT communications architecture is shown in which a flexible label 10 wirelessly communicates sensor readings via a cellular network 12 to a computer network 14 (e.g., including a cloud computing infrastructure and/or cloud server). In an embodiment, the computer network 14 communicates with one or more remote devices 16 (16a-16c, e.g., central computers) via a wireless network 18 (e.g., operating on a cellular or other wireless protocol). As will be discussed in greater detail, the flexible label 10 may include a flexible circuit 20 (20a-20h) coupled to a flexible substrate 22 (e.g., polymer with an adhesive backing). In one example, the flexible circuit 20 includes a flexible printed circuit board (PCB) 20a (e.g., containing electrical traces printed on one or both sides), a microcontroller 20b, a motion sensor 20c (e.g., accelerometer that detects shock, vibration and/or tampering), an ultraviolet (UV) light sensor 20d, a UV index (e.g., visible light) sensor 20e, an environmental sensor 20f (e.g., having temperature, relative humidity and/or pressure sensing capabilities), a flexible power source such as a battery 20g, and an antenna 20h.

The microcontroller 20b may be programmed to identify sensor readings in one or more signals (e.g., temperature signals, relative humidity/RH signals, location signals, motion signals, etc.) from the sensors 20c-20f and send the sensor readings to the computer network 14, a tablet device 16a, a smart phone 16b and/or a workstation 16c. Of particular note is that one or more of the sensor readings may be sent in a push communication that is not in response to a request or interrogation from an external device. Rather, the microcontroller 20b may generate the push communication in accordance with a programmable time interval, in response to an event associated with the sensor readings, etc., or any combination thereof. For example, the event might correspond to a temperature measurement crossing a temperature threshold, a humidity measurement crossing a humidity threshold, a vibration event, an impact event, a tampering event, and so forth. With respect to the programmable time interval, the microcontroller 20b may extend battery life by powering down when not communicating with the sensors 20c-20f or the computer network 14. The illustrated flexible label 10 is therefore enhanced relative to conventional active, passive and manual solutions at least to the extent that it enables proactive tracking, a robust communications infrastructure, the ability to track relatively small items/assets and/or less vulnerability to package tampering.

Indeed, the label 10 may be useful in applications outside the warehouse/factory context. For example, the label 10 might be used to monitor the state of household objects such as a coffee mug (e.g., monitoring surface temperature and/or condensation), tools such as a drill (e.g., monitoring oscillation frequency and/or strength over time), and so forth.

FIG. 2 shows a 3D sensor geometry 30 in which a first sensor (sensor "A") is placed on a first surface of an object (e.g., in the x-plane), a second sensor (sensor "B") is placed on a second surface of the object (e.g., in the y-plane), and a third sensor (sensor "C") is placed in a third surface of the object (e.g., in the z-plane). The sensors A, B and C are incorporated into a flexible label such as the flexible label 10 (FIG. 1), already discussed. Similarly, another 3D sensor geometry 32 may include a first sensor (sensor "A"), a second sensor (sensor "B"), and a third sensor (sensor "C") that are placed on a curved surface of an object. The 3D sensor geometries 30, 32 therefore demonstrate the form factor advantages of flexible sensors as described herein.

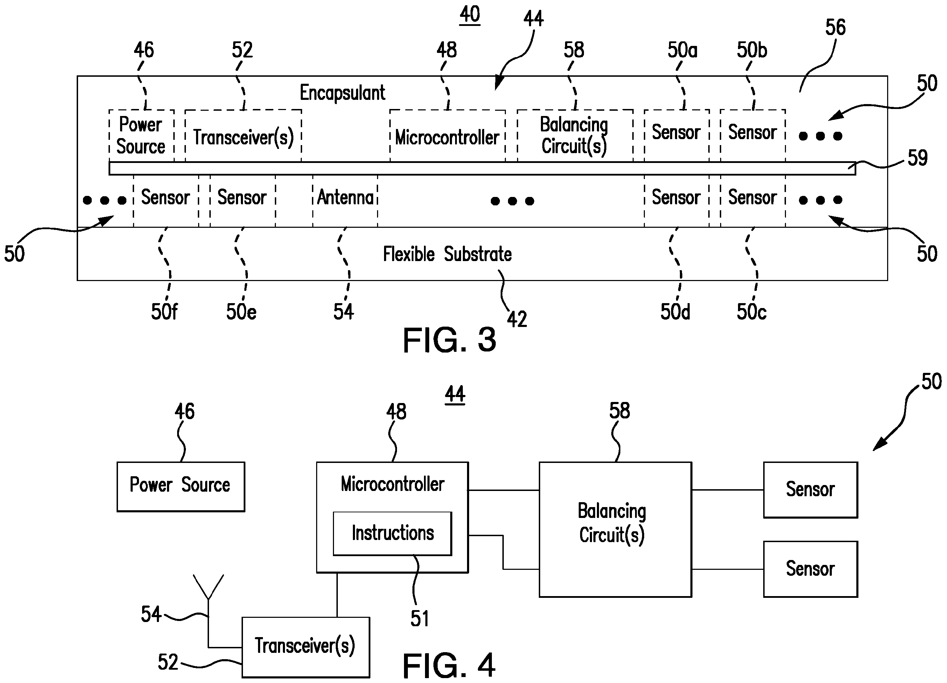

Turning now to FIG. 3, a label 40 is shown. The illustrated label 40, which may be readily substituted for the label 10 (FIG. 1), already discussed, includes a flexible substrate 42 (e.g., with a "peel and stick") backing and a flexible circuit 44 coupled to the flexible substrate 42. In an embodiment, the flexible circuit 44 includes a power source 46, a microcontroller 48, a plurality of sensors 50 (50a-50f), one or more transceivers 52, and a flexible antenna 54. As already noted, the microcontroller 48 may be programmed to identify sensor readings in one or more signals from the plurality of sensors 50 and send the sensor readings to one or more of a central computer or a computer network via one or more standard wireless transmission protocols.

For example, the one or more signals may include a temperature signal (e.g., containing a temperature measurement), a relative humidity signal (e.g., containing a humidity measurement), a location signal (e.g., containing a location measurement based on triangulation or other suitable technology), a motion signal (e.g., containing a motion measurement), etc. In an embodiment, at least one of the sensor readings indicates one or more of a temperature measurement crossing a temperature threshold (e.g., exceeding an upper temperature threshold or falling below a lower temperature threshold), a humidity (e.g., RH) measurement crossing a humidity threshold (e.g., exceeding an upper humidity threshold or falling below a lower humidity threshold), a vibration event (e.g., during vehicle transit), an impact event (e.g., during warehouse storage), a tampering event (e.g., attempted removal), etc., or any combination thereof. Additionally, the microcontroller 48 may generate the push communication in response to an event (e.g., temperature, humidity, vibration, impact and/or tampering event) associated with the sensor readings. In one example, the microcontroller 48 generates the push communication in accordance with a programmable time interval (e.g., every thirty seconds to five minutes). At least one of the sensor readings may also be sent in response to a request (e.g., interrogation).

The illustrated label 40 also includes an encapsulant 56 to provide environmental protection to the flexible circuit 44. Accordingly, the label 40 may withstand broad temperature ranges within warehouse environments as well as the vibration and shot typical of current package handling practices. In one example, the power source 46 is replaceable. Additionally, the power source 46 may be rigid or flexible, depending on the circumstances.

In an embodiment, the microcontroller 48 encrypts the sensor readings prior to transmission (e.g., data is encrypted in motion). In such a case, the sensor readings may be sent to the central computer and/or the computer network via an identity verified network communication link to further protect against tampering. Additionally, software trust may be verified at a hardware level to protect against software binary and configuration compromises. The standard wireless transmission protocols may include a cellular IoT protocol, a wireless protocol, an ultra-wideband (UWB) protocol, a BLUETOOTH low energy (BLE) protocol, a wireless mesh network protocol, a 5G (fifth generation) network protocol (e.g., 5G New Radio/NR), a wireless network communication protocol, a cellular network communication protocol, etc., or any combination thereof.

In the illustrated example, the flexible circuit 44 includes a flexible PCB 59. The flexible PCB 59 may include laser cut vias (not shown) and electrical traces (not shown) printed on both sides of the flexible PCB 59. Although the illustrated sensors 50 are mounted to the flexible PCB 59, additional external sensors may also be connected to the flexible PCB 59 via a multi-wire interface such as, for example, an I²C (inter-integrated circuit), I²S (inter-integrated chip sound) and/or SPI (serial peripheral interconnect) interface. In an embodiment, the flexible circuit 44 also includes one or more balancing circuits 58 to ensure that the signal lines between the microcontroller 48 and the sensors 50 are of a matched impedance. The balancing circuits 58 may be in the form of passive components, active (e.g., requiring power) or passive packaged parts, or alternatively be incorporated into the microcontroller 48.

FIG. 4 demonstrates that the microcontroller 48 may include one or more instructions 51, which when executable by the microcontroller 48, cause the microcontroller 48 to identify sensor readings in one or more signals from the plurality of sensors 50 and send the sensor readings to one or more of a central computer or a computer network via one or more standard wireless transmission protocols. As already noted, at least one of the sensor readings may be sent in a push communication.

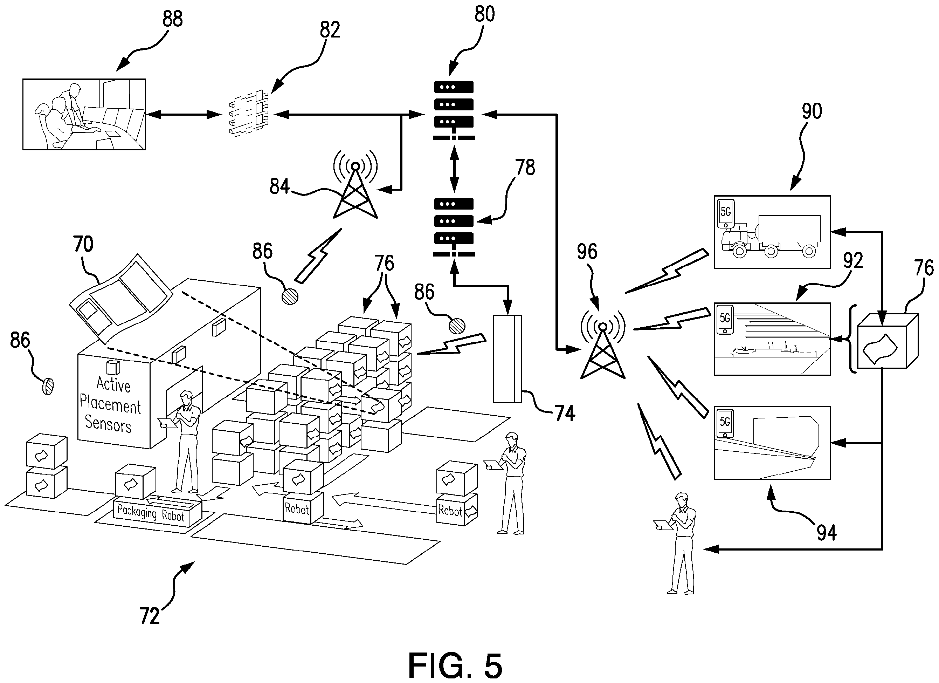

FIG. 5 shows an environment in which secure IoT labels such as a label 70 are mounted to various packages 76 in an automated warehouse 72. In an embodiment, the label 70 is similar to the label 10 (FIG. 1) and/or the label 40 (FIG. 3), already discussed. The label 70 may send push communications to a directional antenna 74 such as, for example, a large multiple input multiple output (MIMO) signal collection antenna that improves connectivity and provides a tracking resolution on the order of 0.15 meters (6 inches). In one example, the directional antenna 74 communicates with a cellular (e.g., LTE-M (Long Term Evolution Category Mobile1), LTE NB-IoT (Narrow Band Internet of Things), or 5G New Radio) core system 78, which in turn communicates with a cellular secure authentication (SA) core system 80 (e.g., enforcing zero trust mobile constraints and/or identity verified network communication links). For example, the identity verified network communication links may involve a trust handshake protocol between the cellular SA core system 80 and the cellular core system 78 (e.g., non-SA). In an embodiment, the cellular SA core system 80 also communicates with an accountable property system of record APSR 82 and an antenna 84 that receives signals from one or more cameras 86 that are mounted within the automated warehouse 72, allowing for visual imagery data to be added to the APSR. Accordingly, warehouse operations personnel 88 may be automatically alerted to conditions such as a temperature measurement crossing a temperature threshold, a humidity measurement crossing a humidity threshold, a vibration event, an impact event, a tampering event, visual imagery, and so forth.

Indeed, the label 70 may enhance incoming and outgoing logistics by enabling localized data collection in trucks 90, shipyard docks 92, and containers 94. In such a case, slicing may be used in a 5G RAN (radio access network) 96. More particularly, the original network architecture may be expanded and potentially "sliced" across different frequency bands in multiple logical and independent networks that are configured to effectively meet various service requirements. In an embodiment, the following techniques are employed:
- Network functions express elementary network functionalities that are used as "building blocks" to create every network slice;
- Virtualization provides an abstract representation of the physical resources under a unified and homogeneous scheme and enables a scalable slice deployment relying on NFV (network function virtualization), where each network function instance is decoupled from the network hardware running the instance;
- Orchestration is a process that enables coordination of the different network components that are involved in the life-cycle of each network slice. In this context, SDN (Software-Defined Networking) may be used to enable a dynamic and flexible slice configuration.

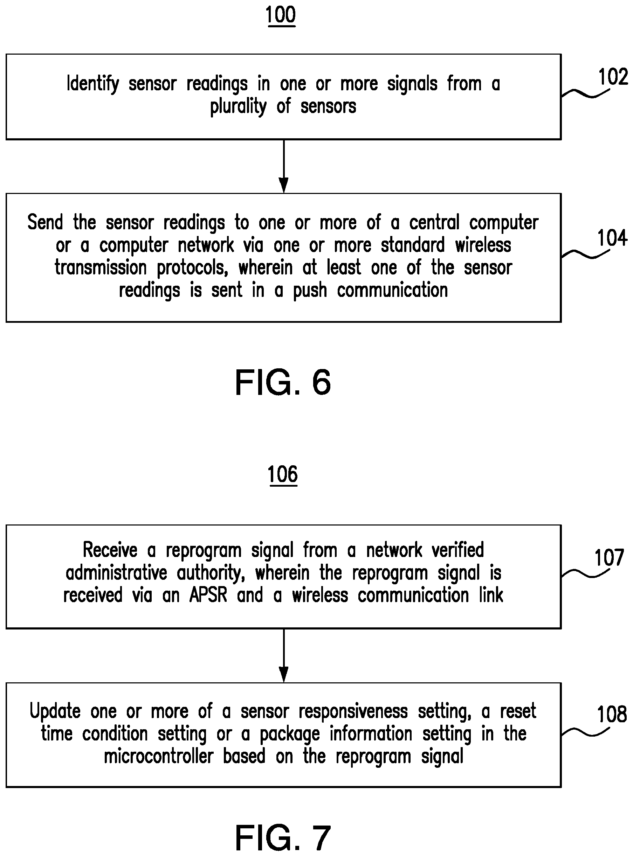

FIG. 6 shows a method 100 of operating a microcontroller. The method 100 may generally be implemented in a microcontroller such as, for example, the microcontroller 20b (FIG. 1) and/or the instructions 51 of the microcontroller 48 (FIGs. 3 and 4), already discussed. More particularly, the method 100 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof.

Illustrated processing block 102 provides for identifying sensor readings in one or more signals from a plurality of sensors in a flexible label. The sensor readings may indicate, for example, a temperature measurement crossing a temperature threshold, a humidity measurement crossing a humidity threshold, a vibration event, an impact event, a tampering event, etc., or any combination thereof. Block 102 may include comparing measurements to thresholds (e.g., programmable thresholds) and/or detecting one or more warning messages in the signal(s) (e.g., with the sensors performing the comparisons).

Block 104 may provide for sending the sensor readings to one or more of a central computer or a computer network via one or more standard wireless transmission protocols such as, for example, a cellular IoT protocol, a wireless protocol, a UWB protocol, a BLE protocol, a wireless mesh network protocol, a 5G network protocol, a wireless network communication protocol, a cellular network communication protocol, and so forth. In the illustrated example, at least one of the sensor readings is sent in a push communication. Alternatively, the sensor readings may be sent over a wired link.

The push communication may be generated in multiple ways. For example, the push communication may be generated in response to an event (e.g., temperature event, humidity event, motion event, vibration event, impact event) associated with the sensor readings. Additionally, the push communication may be generated in accordance with a programmable time interval (e.g., periodically). In an embodiment, at least one of the sensor readings is sent in response to a request. In one example, block 104 also provides for encrypting the sensor readings, wherein the encrypted sensor readings are sent to the central computer and/or computer network via an identity verified network communication link. The illustrated method 100 therefore enhances performance at least to the extent that it enables proactive tracking, a robust communications infrastructure, the ability to track relatively small items and/or less vulnerability to package tampering.

FIG. 7 shows a method 106 of reprogramming a microcontroller such as, for example, the microcontroller 20b (FIG. 1) and/or the instructions 51 of the microcontroller 48 (FIGs. 3 and 4), already discussed. The method 106 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality hardware logic using circuit technology such as, for example, ASIC, CMOS or TTL technology, or any combination thereof.

Illustrated processing block 107 provides for receiving a reprogram signal from a network verified administrative authority, wherein the reprogram signal is received via an APSR and a wireless communication link. In an embodiment, block 108 updates one or more of a sensor responsiveness setting, a reset time condition setting or a package information setting in the microcontroller based on the reprogram signal.

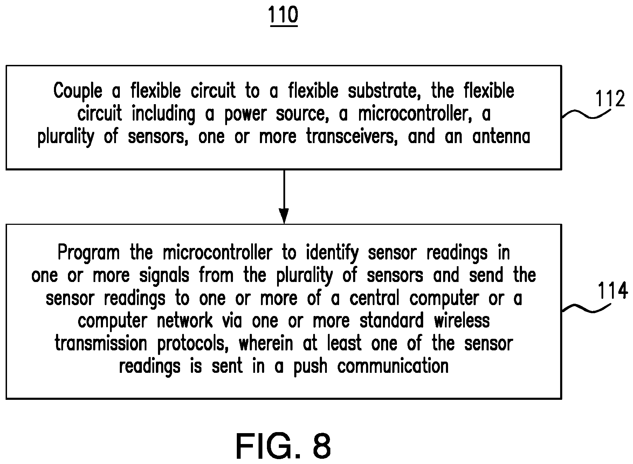

FIG. 8 shows a method 110 of fabricating a label such as, for example, the label 10 (FIG. 1), the label 40 (FIG. 3) and/or the label 70 (FIG. 5). The method 110 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality hardware logic using circuit technology such as, for example, ASIC, CMOS or TTL technology, or any combination thereof.

Illustrated processing block 112 provides for coupling a flexible circuit to a flexible substrate, where the flexible circuit includes a power source, a microcontroller, a plurality of sensors, one or more transceivers, and an antenna. In an embodiment, the plurality of sensors include a temperature sensor, a relative humidity sensor, a location sensor, and a motion sensor (e.g., to detect vibration, shock, tampering, etc.). One or more of the sensors may also be combined into a shared package (e.g., combined temperature and RH sensor). In one example, the flexible circuit further includes a flexible PCB and one or more balancing circuits. Additionally, block 112 may further include laser cutting vias in the flexible PCB, printing electrical traces on the flexible PCB, and molding an encapsulant substantially around the flexible circuit.

Block 114 may provide for programming the microcontroller to identify sensor readings in one or more signals from the plurality of sensors and send the sensor readings to one or more of a central computer or a computer network via one or more standard wireless transmission protocols. In the illustrated example, at least one of the sensor readings is to be sent in a push communication. The illustrated method 110 therefore produces a label that enables proactive tracking, a robust communications infrastructure, the ability to track relatively small items and/or less vulnerability to package tampering.

## Claims

1. A label (10, 40, 70) comprising:
a flexible substrate (22, 42) ; and
a flexible circuit (20, 44) coupled to the flexible substrate, the flexible circuit including a power source (20g, 46), a microcontroller (20b, 48), one or more transceivers (52), and an antenna (54), **characterized in that** the flexible circuit further includes a plurality of sensors (20c-f, A-C, 50a-f),
wherein the plurality of sensors is arranged in a 3D sensor geometry (30) and comprises a first sensor (A) placed on a first surface of an object, a second sensor (B) placed on a second surface of the object, and a third sensor (C) placed in a third surface of the object, and wherein the microcontroller is to:
identify sensor readings in one or more signals from the plurality of sensors, and
send the sensor readings to one or more of a central computer (16) or a computer network (14) via one or more standard wireless transmission protocols, wherein at least one of the sensor readings is sent in a push communication.

2. The label of claim 1, wherein the sensor readings are to indicate one or more of a temperature measurement crossing a temperature threshold, a humidity measurement crossing a humidity threshold, a vibration event, an impact event or a tampering event.

3. The label of any of claims 1-2, wherein the microcontroller is to at least one of:
generate the push communication in response to an event associated with the sensor readings;
generate the push communication in accordance with a programmable time interval;
encrypt the sensor readings, and the encrypted sensor readings are to be sent to one or more of the central computer or the computer network via an identity verified network communication link.

4. The label of any of claims 1-3, wherein at least one of the sensor readings are sent in response to a request.

5. The label of any of claims 1-4, wherein the one or more signals include a temperature signal, a relative humidity signal, a location signal and a motion signal.

6. The label of any of claims 1-5, further including an encapsulant (56) substantially surrounding the flexible circuit.

7. The label of any of claims 1-6, wherein the standard wireless transmission protocols include one or more of a cellular Internet of Things (IoT) protocol, a wireless protocol, an ultra-wideband protocol, a BLUETOOTH low energy protocol, a wireless mesh network protocol, a 5G network protocol, a wireless network communication protocol, or a cellular network communication protocol.

8. The label of any of claims 1-7, wherein the flexible circuit further includes a flexible printed circuit board (20a) and one or more balancing circuits (58).

9. A method (100) of operating a microcontroller, the method comprising:
identifying (102) sensor readings in one or more signals from a plurality of sensors in a flexible label, wherein the plurality of sensors are arranged in a 3D sensor geometry (30) and comprise a first sensor (A) placed on a first surface of an object, a second sensor (B) placed on a second surface of the object, and a third sensor (C) placed in a third surface of the object; and
sending (104) the sensor readings to one or more of a central computer or a computer network via one or more standard wireless transmission protocols, wherein at least one of the sensor readings is sent in a push communication.

10. The method of claim 9, wherein the sensor readings indicate one or more of a temperature measurement crossing a temperature threshold, a humidity measurement crossing a humidity threshold, a motion event, a vibration event, an impact event or a tampering event.

11. The method of any of claims 9-10, further including at least one of:
generating the push communication in response to an event associated with the sensor readings;
generating the push communication in accordance with a programmable time interval;
encrypting the sensor readings, wherein the encrypted sensor readings are sent to one or more of the central computer or the computer network via an identity verified network communication link; and
updating (108) one or more of a sensor responsiveness setting, a reset time condition setting or a package information setting in the microcontroller based on a reprogram signal from a network verified administrative authority, wherein the reprogram signal is received (107) via an accountable property system of record and a wireless communication link

12. The method of any of claims 9-11, wherein at least one of the sensor readings are sent in response to a request.

13. The method of any of claims 9-12, wherein the standard wireless transmission protocols include one or more of a cellular Internet of Things (IoT) protocol, a wireless protocol, an ultra-wideband protocol, a BLUETOOTH low energy protocol, a wireless mesh network protocol, a 5G network protocol, a wireless network communication protocol, or a cellular network communication protocol.

14. A method (110) of fabricating a label, the method comprising:
coupling (112) a flexible circuit to a flexible substrate, the flexible circuit including a power source, a microcontroller, a plurality of sensors, one or more transceivers, and an antenna, wherein the plurality of sensors is in a 3D sensor geometry (30) and comprises a first sensor (A) placed on a first surface of an object, a second sensor (B) placed on a second surface of the object, and a third sensor (C) placed in a third surface of the object; and
programming (114) the microcontroller to identify sensor readings in one or more signals from the plurality of sensors and send the sensor readings to one or more of a central computer or a computer network via one or more standard wireless transmission protocols, wherein at least one of the sensor readings is sent in a push communication,
wherein the plurality of sensors include a temperature sensor, a relative humidity sensor, a location sensor and a motion sensor, and wherein the flexible circuit further includes a flexible printed circuit board and one or more balancing circuits.

15. The method of claim 14, further including molding an encapsulant substantially around the flexible circuit.

## Patentansprüche

1. Etikett (10, 40, 70), aufweisend:
ein flexibles Substrat (22, 42); und
eine flexible Schaltung (20, 44), die mit dem flexiblen Substrat gekoppelt ist, wobei die flexible Schaltung eine Energiequelle (20g, 46), einen Mikrocontroller (20b, 48), einen oder mehrere Sender-Empfänger (52) und eine Antenne (54) aufweist,
**dadurch gekennzeichnet, dass** die flexible Schaltung ferner mehrere Sensoren (20c-f, A-C, 50-f) aufweist,
wobei die mehreren Sensoren in einer 3D-Sensorgeometrie (30) angeordnet sind und einen an einer ersten Oberfläche eines Objekts angeordneten ersten Sensor (A), einen an einer zweiten Oberfläche des Objekts angeordneten zweiten Sensor (B) und einen an einer dritten Oberfläche des Objekts angeordneten dritten Sensor (C) aufweisen, und wobei der Mikrocontroller zu Folgendem dient:
Identifizieren von Sensorablesungen in einem oder mehreren Signalen aus den mehreren Sensoren, und
Senden der Sensorablesungen über ein oder mehrere Standard-Drahtlosübertragungsprotokolle zu einem oder mehreren eines zentralen Computers (16) oder eines Computernetzwerks (14), wobei mindestens eine der Sensorablesungen in einer Push-Kommunikation gesendet wird.

2. Etikett nach Anspruch 1, wobei die Sensorablesungen ein oder mehrere Ereignisse einer Temperaturmessung, die eine Temperaturschwelle überschreitet, einer Feuchtigkeitsmessung, die eine Feuchtigkeitsschwelle überschreitet, einer Schwingung, eines Stoßes oder eines unbefugten Eingriffs anzeigen sollen.

3. Etikett nach einem der Ansprüche 1 bis 2, wobei der Mikrocontroller zu Folgendem dient:
Erzeugen der Push-Kommunikation als Antwort auf ein mit den Sensorablesungen verknüpftes Ereignis; und/oder
Erzeugen der Push-Kommunikation gemäß einem programmierbaren Zeitintervall; und/oder
Verschlüsseln der Sensorablesungen, wobei die verschlüsselten Sensorablesungen über eine identitätsverifizierte Netzwerkkommunikationsverbindung zu einem oder mehreren des zentralen Computers oder des Computernetzwerks zu senden sind.

4. Etikett nach einem der Ansprüche 1 bis 3, wobei mindestens eine der Sensorablesungen als Antwort auf eine Anfrage gesendet wird.

5. Etikett nach einem der Ansprüche 1 bis 4, wobei das eine oder die mehreren Signale ein Temperatursignal, ein Relative-Feuchtigkeit-Signal, ein Ortssignal und ein Bewegungssignal umfassen.

6. Etikett nach einem der Ansprüche 1 bis 5, ferner aufweisend eine Einkapselung (56), die die flexible Schaltung im Wesentlichen umgibt.

7. Etikett nach einem der Ansprüche 1 bis 6, wobei die Standard-Drahtloskommunikationsprotokolle eines oder mehrere von folgenden aufweisen: ein Zelluläres-Internet-der-Dinge (IoT) Protokoll, ein Drahtlos-Protokoll, ein Ultrabreitband-Protokoll, ein BLUETOOTH-Niederenergie-Protokoll, ein Drahtlos-Maschennetzwerk-Protokoll, ein 5G-Netzwerk-Protokoll, ein Drahtlosnetzwerk-Kommunikation-Protokoll oder ein Zelluläres-Netzwerk-Kommunikation-Protokoll.

8. Etikett nach einem der Ansprüche 1 bis 7, wobei die flexible Schaltung ferner eine flexible gedruckte Schaltkarte (20a) und eine oder mehrere Ausgleichsschaltungen (58) aufweist.

9. Verfahren (100) zum Betreiben eines Mikrocontrollers, wobei das Verfahren aufweist:
Identifizieren (102) von Sensorablesungen in einem oder mehreren Signalen aus mehreren Sensoren in einem flexiblen Etikett, wobei die mehreren Sensoren in einer 3D-Sensorgeometrie (30) angeordnet sind und einen an einer ersten Oberfläche eines Objekts angeordneten ersten Sensor (A), einen an einer zweiten Oberfläche des Objekts angeordneten zweiten Sensor (B) und einen an einer dritten Oberfläche des Objekts angeordneten dritten Sensor (C) aufweisen,
Senden (104) der Sensorablesungen über ein oder mehrere Standard-Drahtlosübertragungsprotokolle zu einem oder mehreren eines zentralen Computers oder eines Computernetzwerks, wobei mindestens eine der Sensorablesungen in einer Push-Kommunikation gesendet wird.

10. Verfahren nach Anspruch 9, wobei die Sensorablesungen ein oder mehrere Ereignisse einer Temperaturmessung, die eine Temperaturschwelle überschreitet, einer Feuchtigkeitsmessung, die eine Feuchtigkeitsschwelle überschreitet, einer Bewegung, einer Schwingung, eines Stoßes oder eines unbefugten Eingriffs anzeigen.

11. Verfahren nach einem der Ansprüche 9 bis 10, ferner aufweisend:
Erzeugen der Push-Kommunikation als Antwort auf ein mit den Sensorablesungen verknüpftes Ereignis; und/oder
Erzeugen der Push-Kommunikation gemäß einem programmierbaren Zeitintervall; und/oder
Verschlüsseln der Sensorablesungen, wobei die verschlüsselten Sensorablesungen über eine identitätsverifizierte Netzwerkkommunikationsverbindung zu einem oder mehreren des zentralen Computers oder des Computernetzwerks gesendet werden; und/oder
Aktualisieren (108) einer oder mehrerer Einstellungen einer Sensoransprechbarkeit, einer Rücksetzzeitbedingung oder einer Paketinformation in dem Mikrocontroller auf Basis eines Umprogrammierungssignals aus einer netzwerkverifizierten Administrationsautorität, wobei das Umprogrammierungssignal über ein rechenschaftspflichtiges Eigentumsverzeichnissystem und eine Drahtloskommunikationsverbindung empfangen (107) wird.

12. Verfahren nach einem der Ansprüche 9 bis 11, wobei mindestens eine der Sensorablesungen als Antwort auf eine Anfrage gesendet wird.

13. Verfahren nach einem der Ansprüche 9 bis 12, wobei die Standard-Drahtloskommunikationsprotokolle eines oder mehrere von folgenden aufweisen: ein Zelluläres-Internet-der-Dinge (IoT) Protokoll, ein Drahtlos-Protokoll, ein Ultrabreitband-Protokoll, ein BLUETOOTH-Niederenergie-Protokoll, ein Drahtlos-Maschennetzwerk-Protokoll, ein 5G-Netzwerk-Protokoll, ein Drahtlosnetzwerk-Kommunikation-Protokoll oder ein Zelluläres-Netzwerk-Kommunikation-Protokoll.

14. Verfahren (110) zur Herstellung eines Etiketts, wobei das Verfahren aufweist:
Koppeln (112) einer flexiblen Schaltung an ein flexibles Substrat, wobei die flexible Schaltung eine Energiequelle, einen Mikrocontroller, mehrere Sensoren, einen oder mehrere Sender-Empfänger und eine Antenne aufweist, wobei die mehreren Sensoren in einer 3D-Sensorgeometrie (30) angeordnet sind und einen an einer ersten Oberfläche eines Objekts angeordneten ersten Sensor (A), einen an einer zweiten Oberfläche des Objekts angeordneten zweiten Sensor (B) und einen an einer dritten Oberfläche des Objekts angeordneten dritten Sensor (C) aufweisen; und
Programmieren (114) des Mikrocontrollers, um
Sensorablesungen in einem oder mehreren Signalen aus den mehreren Sensoren zu identifizieren und die Sensorablesungen über ein oder mehrere Standard-Drahtlosübertragungsprotokolle zu einem oder mehreren eines zentralen Computers oder eines Computernetzwerks zu senden, wobei mindestens eine der Sensorablesungen in einer Push-Kommunikation gesendet wird,
wobei die mehreren Sensoren einen Temperatursensor, einen Relative-Feuchtigkeit-Sensor, einen Ortssensor und einen Bewegungssensor aufweisen, und wobei die flexible Schaltung ferner eine flexible gedruckte Schaltkarte und eine oder mehrere Ausgleichsschaltungen aufweist.

15. Verfahren nach Anspruch 14, ferner aufweisend Formen einer Einkapselung im Wesentlichen um die flexible Schaltung herum.

## Revendications

1. Étiquette (10, 40, 70) comprenant :
un substrat souple (22, 42) ; et
un circuit souple (20, 44) couplé au substrat souple, le circuit souple comportant une source d'alimentation (20g, 46), un microcontrôleur (20b, 48), un ou plusieurs émetteurs-récepteurs (52) et une antenne (54), **caractérisée en ce que** le circuit souple comporte en outre une pluralité de capteurs (20c-f, A-C, 50a-f),
dans lequel la pluralité de capteurs est agencée selon une géométrie de capteurs 3D (30) et comprend un premier capteur (A) placé sur une première surface d'un objet, un deuxième capteur (B) placé sur une deuxième surface de l'objet et un troisième capteur (C) placé sur une troisième surface de l'objet, et dans lequel le microcontrôleur est destiné à :
identifier des lectures de capteur dans un ou plusieurs signaux provenant de la pluralité de capteurs, et
envoyer les lectures de capteur à un ou plusieurs parmi un ordinateur central (16) ou un réseau informatique (14) via un ou plusieurs protocoles de transmission sans fil standard, dans lequel au moins une parmi les lectures de capteur est envoyée lors d'une communication push.

2. Étiquette selon la revendication 1, dans laquelle les lectures de capteur sont destinées à indiquer un ou plusieurs parmi une mesure de température dépassant un seuil de température, une mesure d'humidité dépassant un seuil d'humidité, un événement de vibration, un événement d'impact ou un événement de falsification.

3. Étiquette selon l'une quelconque des revendications 1 à 2, dans laquelle le microcontrôleur est destiné à réaliser au moins une parmi les étapes suivantes :
la génération de la communication push en réponse à un événement associé aux lectures de capteur ;
la génération de la communication push conformément à un intervalle de temps programmable ;
le cryptage des lectures de capteur, les lectures de capteur étant destinées à être envoyées à un ou plusieurs parmi l'ordinateur central et le réseau informatique via une liaison de communication de réseau à identité vérifiée.

4. Étiquette selon l'une quelconque des revendications 1 à 3, dans laquelle au moins une parmi les lectures de capteur est envoyée en réponse à une requête.

5. Étiquette selon l'une quelconque des revendications 1 à 4, dans laquelle les uns ou plusieurs signaux comportent un signal de température, un signal d'humidité relative, un signal de localisation et un signal de mouvement.

6. Étiquette selon l'une quelconque des revendications 1 à 5, comportant en outre un agent d'encapsulation (56) entourant sensiblement le circuit souple.

7. Étiquette selon l'une quelconque des revendications 1 à 6, dans laquelle les protocoles de transmission sans fil standard comportent un ou plusieurs parmi un protocole cellulaire de l'Internet des Objets (IoT), un protocole sans fil, un protocole ultra large bande, un protocole BLUETOOTH Low Energy, un protocole de réseau sans fil maillé, un protocole de réseau 5G, un protocole de communication de réseau sans fil ou un protocole de communication de réseau cellulaire.

8. Étiquette selon l'une quelconque des revendications 1 à 7, dans laquelle le circuit souple comporte en outre une carte de circuit imprimé souple (20a) et un ou plusieurs circuits d'équilibrage (58).

9. Procédé (100) de fonctionnement d'un microcontrôleur, le procédé comprenant l'identification (102) de lectures de capteur dans un ou plusieurs signaux parmi une pluralité de capteurs dans une étiquette souple, dans lequel la pluralité de capteurs sont agencés selon une géométrie de capteurs 3D (30) et comprennent un premier capteur (A) placé sur une première surface d'un objet, un deuxième capteur (B) placé sur une deuxième surface de l'objet et un troisième capteur (C) placé sur une troisième surface de l'objet ; et
l'envoi (104) des lectures de capteur à un ou plusieurs parmi un ordinateur central ou un réseau informatique via un ou plusieurs protocoles de transmission sans fil standard, dans lequel au moins une parmi les lectures de capteur est envoyée lors d'une communication push.

10. Procédé selon la revendication 9, dans lequel les lectures de capteur indiquent un ou plusieurs parmi une mesure de température dépassant un seuil de température, une mesure d'humidité dépassant un seuil d'humidité, un événement de mouvement, un événement de vibration, un événement d'impact ou un événement de falsification.

11. Procédé selon l'une quelconque des revendications 9 à 10, comportant en outre au moins une étape parmi :
la génération de la communication push en réponse à un événement associé aux lectures de capteur ;
la génération de la communication push conformément à un intervalle de temps programmable ;
le cryptage des lectures de capteur, dans lequel les lectures de capteur cryptées sont envoyées à un ou plusieurs parmi l'ordinateur central ou le réseau informatique via une liaison de communication de réseau à identité vérifiée ; et
la mise à jour (108) d'un ou plusieurs parmi un réglage de réactivité de capteur, un réglage de condition de temps de réinitialisation ou un réglage d'informations de paquets dans le microcontrôleur sur la base d'un signal de reprogrammation provenant d'une autorité administrative vérifiée de réseau, dans lequel le signal de reprogrammation est reçu (107) via un système d'enregistrement de propriété responsable et une liaison de communication sans fil.

12. Procédé selon l'une quelconque des revendications 9 à 11, dans lequel au moins une parmi les lectures de capteur est envoyée en réponse à une requête.

13. Procédé selon l'une quelconque des revendications 9 à 12, dans lequel les protocoles de transmission sans fil standard comportent un ou plusieurs parmi un protocole cellulaire de l'Internet des Objets (IoT), un protocole sans fil, un protocole ultra large bande, un protocole BLUETOOTH Low Energy, un protocole de réseau sans fil maillé, un protocole de réseau 5G, un protocole de communication de réseau sans fil ou un protocole de communication de réseau cellulaire.

14. Procédé (110) de fabrication d'une étiquette, le procédé comprenant :
le couplage (112) d'un circuit souple à un substrat souple, le circuit souple comportant une source d'alimentation, un microcontrôleur, une pluralité de capteurs, un ou plusieurs émetteurs-récepteurs et une antenne, dans lequel la pluralité de capteurs est agencée selon une géométrie de capteurs 3D (30) et comprend un premier capteur (A) placé sur une première surface d'un objet, un deuxième capteur (B) placé sur une deuxième surface de l'objet et un troisième capteur (C) placé sur une troisième surface de l'objet, et
la programmation (114) du microcontrôleur pour identifier des lectures de capteur dans un ou plusieurs signaux provenant de la pluralité de capteurs et envoyer les lectures de capteur à un ou plusieurs parmi un ordinateur central ou un réseau informatique via un ou plusieurs protocoles de transmission sans fil standard, dans lequel au moins une parmi les lectures de capteur est envoyée lors d'une communication push,
dans lequel la pluralité de capteurs comportent un capteur de température, un capteur d'humidité relative, un capteur de localisation et un capteur de mouvement, et dans lequel le circuit souple comporte en outre une carte de circuit imprimé souple et un ou plusieurs circuits d'équilibrage.

15. Procédé selon la revendication 14, comportant en outre le moulage d'un agent d'encapsulation sensiblement autour du circuit souple.
